# EUROPÄISCHE PATENTSCHRIFT

(11) **EP 1 868 803 B1**
(45) Veröffentlichungstag und Bekanntmachung des Hinweises auf die Patenterteilung: **21.07.2010**
(21) Anmeldenummer: 06724101.8
(22) Anmeldetag: 07.04.2006
(51) Int. Cl.: B32B 5/00, D04H 13/00, F41H 5/04

(54) **PANZERUNGSELEMENT UND VERFAHREN ZU SEINER HERSTELLUNG**
ARMORING ELEMENT AND METHOD FOR THE PRODUCTION THEREOF
ELEMENT DE BLINDAGE ET PROCEDE POUR LE PRODUIRE

(30) Priorität: 09.04.2005 DE 102005016372
(43) Veröffentlichungstag der Anmeldung: 26.12.2007
(73) Patentinhaber: Fraunhofer-Gesellschaft zur Förderung der angewandten Forschung e.V., 80686 München (DE)
(72) Erfinder: POPP, Hermann, 76149 Karlsruhe (DE); STARK, Alexander, 76135 Karlsruhe (DE); ELSNER, Peter, 76327 Pfinztal (DE); TRÖSTER, Stefan, 76137 Karlsruhe (DE)
(74) Vertreter: Lenz, Steffen
(86) Internationale Anmeldenummer: PCT/EP2006/003157
(87) Internationale Veröffentlichungsnummer: WO 2006/108560

(56) Entgegenhaltungen:
- DE-A1- 19 956 197
- US-A1- 2003 199 215

## Beschreibung

Die Erfindung betrifft ein Verfahren zur Herstellung eines Panzerungselementes mit wenigstens drei im wesentlichen parallel angeordneten Lagen aus je einem mit wenigstens einem aushärtenden und/oder ausgehärteten Polymer imprägnierten Textil, wobei wenigstens eine erste Lage mit einem ersten Polymer und wenigstens eine dritte Lage mit einem dritten Polymer imprägniert sind, wobei das erste und das dritte Polymer identisch oder verschieden, aber miteinander kompatibel sind, während wenigstens eine unmittelbar oder mittelbar zwischen der ersten und der dritten Lage angeordnete zweite Lage mit einem von dem ersten Polymer der ersten Lage und dem der dritten Lage verschiedenen, insbesondere nicht oder nur schlecht mit dem ersten und dritten Polymer kompatiblen zweiten Polymer imprägniert ist. Die Erfindung ist ferner auf ein Panzerungselement der vorgenannten Art gerichtet.

Panzerungselemente sind in vielerlei Ausgestaltung bekannt und finden ihren Einsatz z.B. in gepanzerten Fahrzeugen oder Gebäuden, um den Insassen bzw. Bewohnern eine möglichst hohe gewisser Sicherheit im Falle eines Beschusses zu verleihen. Ferner kommen solche Panzerungselemente beispielsweise in Flugzeugen zum Einsatz, um insbesondere im Entführungsfall dafür zu sorgen, daß Projektile aus Schußwaffen die Außenhaut des Flugzeugs nicht durchschlagen und/oder ein gewaltsames Eindringen Dritter in das Cockpit verhindert wird. In vielen Fällen sind Panzerungselemente aus beschußsicherem Stahl oder Glas gebildet, was einerseits den Nachteil besitzt, daß solchermaßen gepanzerte - bewegliche oder unbewegliche - Sachen ein sehr hohes Gewicht besitzen. Dies ist insbesondere bei Kraftfahrzeugen im Hinblick darauf nachteilig, daß sich die Fahreigenschaften des Fahrzeugs nachhaltig verschlechtern, so daß ergänzende Maßnahmen erforderlich sind, wie Modifikationen des Fahrwerks, der Lenkung und dergleichen. Überdies ergibt sich - wie selbstverständlich auch bei Flugzeugen - ein erhöhter Kraftstoffverbrauch. Andererseits ist die Formgebung solcher Panzerungselemente äußerst aufwendig und ist eine kostenintensive Einzelanfertigung erforderlich, um die Panzerungselemente z.B. in einen jeweiligen, vor Beschuß zu sichernden Kraftfahrzeugtyp einzubauen.

Ferner sind Panzerungselemente bekannt, welche aus mehreren Lagen aus mit ausgehärteten Polymeren imprägnierten Textilien gebildet sind und insbesondere einen laminatförmigen Aufbau besitzen können. Die Textilien können dabei eine praktisch beliebige Struktur aufweisen, z.B. in Form eines Gewebes, Gestrickes, Geleges, Vlieses oder dergleichen ausgebildet sein, wobei vornehmlich hochfeste Fasermaterialien aus Polymerfasern oder solche enthaltenden Fasermaterialien Verbindung mit Polymerfasern möglich. Als Imprägniermaterialien dienen vornehmlich duroplastische oder elastische Polymere, welche durch Aushärten von Flüssigharzen erhalten werden und die Fasern vorzugsweise gänzlich einbetten, um für einen stabilen und feuchtigkeitsunempfindlichen Faserverbund zu sorgen.

Der Vorteil von solchen, aus mit gehärteten Harzen imprägnierten Fasermaterialien gebildeten Panzerungselementen liegt einerseits in ihrem gegenüber solchen aus Panzerglas oder Panzerstahl erheblich geringeren Gewicht; andererseits läßt sich solchen Panzerungselementen durch entsprechendes Zuschneiden der für die einzelnen Lagen vorgesehenen Textilien und Imprägnieren derselben mit dem jeweiligen Harz sowie Aushärten des Harzes in einer geeigneten Form, wie einer Gießform, auf relativ einfache und kostengünstige Weise die gewünschte Form verleihen.

Die US 2003/0199215 A1 beschreibt ein antiballistisch wirkendes Laminat auf der Basis von Textilschichten, die mit einem Elastomer beschichtet sind, welches wiederum mit einer dünnen Kunststoffschicht, insbesondere aus der Gruppe Polyolefine, Polyamide, Polyester und PTFE, beschichtet ist. Die Verbindung der einzelnen Laminatschichten geschieht ausschließlich zwischen benachbarten Lagen, welche insbesondere unter Wärme und Druck durch Aushärten des Elastomerharzes miteinander verbunden werden. Der DE 199 56 197 A1 ist ein weiteres Panzerungselement zu entnehmen, welches eine Sprengstoffschicht aufweist, um ein auftreffendes Projektil zu zerstreuen. Zumindest eine, insbesondere mehrere, darunter angeordnete Schichten des Laminates bestehen aus Textilien, welche mit Kunststoffen imprägniert sind.

Es hat sich gezeigt, daß die Panzerungswirkung bzw. die Beschußsicherheit solcher mehrlagigen und insbesondere laminatartig aufgebauten Panzerungselementen günstiger ist, wenn die einzelnen Lagen verschiedene Imprägniermaterialien, insbesondere mit unterschiedlicher Härte, aufweisen. Dabei kann es von Vorteil sein, die einzelnen Lagen des Panzerungselementes mit unterschiedlicher Härte alternierend anzuordnen, oder auch mehrere Lagen mit ein und derselben Härte (bzw. aus ein und demselben Imprägnierpolymer) gruppenweise übereinander zwischen zwei anderen Lagen mit einer demgegenüber verschiedenen Härte anzuordnen, wobei letztere wiederum einfach oder in Form einer gruppenweise Übereinanderanordnung vorgesehen sein können. Beispielhaft für solche Systeme mit Polymeren mit unterschiedlicher Härte seien einerseits duroplastische, insbesondere hochvernetzte Polymere, z.B. Epoxidharze etc. (mit hoher Härte), andererseits gering vernetzte duroplastische oder elasti-Panzerungselementes mit unterschiedlicher Härte alternierend anzuordnen, oder auch mehrere Lagen mit ein und derselben Härte (bzw. aus ein und demselben Imprägnierpolymer) gruppenweise übereinander zwischen zwei anderen Lagen mit einer demgegenüber verschiedenen Härte anzuordnen, wobei letztere wiederum einfach oder in Form einer gruppenweise Übereinanderanordnung vorgesehen sein können. Beispielhaft für solche Systeme mit Polymeren mit unterschiedlicher Härte seien einerseits duroplastische, insbesondere hochvernetzte Polymere, z.B. Epoxidharze etc. (mit hoher Härte), andererseits gering vernetzte duroplastische oder elastische Polymere, wie Polyurethanharze, Silikonharze etc. (mit demgegenüber erheblich verminderter Härte), erwähnt.

Ein Panzerungslaminat mit mehreren Lagen aus Polymeren unterschiedlicher Härte ist z.B. aus der US 6,846,758 B2 bekannt, wobei einerseits Polymerlagen auf der Basis von Elastomeren, andererseits Polymerlagen auf der Basis von Polyolefinen, insbesondere Polyethylen (PE), Polyamiden, Polyestern und fluorierten Kohlenwasserstoffen vorgesehen sind.

Problematisch ist die Verbindung der einzelnen Lagen eines solchen Panzerungselementes untereinander, was entweder einen Einsatz von speziellen Klebern oder zusätzlicher, mechanischer Verbindungselemente erfordert, da die verschiedenen eingesetzten Harze im Regelfall nicht miteinander kompatibel sind und folglich die Ausbildung einer materialschlüssigen Verbindung während der Aushärtung der Harze nicht möglich ist. Andererseits stellen zusätzliche Verbindungselemente sowie die Aneinanderfügung der einzelnen Lagen mittels der Verbindungselemente einen erheblichen Zeit- und Kostenfaktor dar. Überdies wurde gefunden, daß es von Vorteil ist, wenn im Falle des Aufpralls eines Projektils infolge der auf das Panzerungselement wirkenden mechanischen Belastung bei einer gewissen Aufprallenergie eine zumindest teilweise Delaminierung zumindest einiger Lagen des Panzerungselementes stattfindet, was im Falle eines vollständig imprägnierten Laminates häufig nicht erreicht werden kann. Ein solcher Delaminierungseffekt, welcher auch als "Handtucheffekt" bezeichnet wird, sorgt insoweit für eine zusätzliche Absorption von Aufprallenergie, als das Projektil, welches zunächst aus der einen Lage austreten muß, bevor es in die benachbarte Lage eindringt, zusätzlich die für die Delaminierung der Lagen erforderliche Energie aufbringen muß.

Der Erfindung liegt daher die Aufgabe zugrunde, ein Panzerungselement der eingangs genannten Art unter Vermeidung der vorgenannten Nachteile dahingehend weiterzubilden, daß eine kostengünstige Herstellung desselben und insbesondere eine erhöhte Beschußsicherheit des Panzerungselementes gewährleistet ist.

Diese Aufgabe wird erfindungsgemäß bei einem Verfahren der eingangs genannten Art dadurch gelöst, daß das erste Polymer der ersten Lage mit dem dritten Polymer der dritten Lage bereichsweise kovalent verbunden wird, indem die zwischen der ersten Lage und der dritten Lage angeordnete zweite Lage mit Durchdringungsbereichen versehen wird, welche ein Durchdringen der zweiten Lage mit einem ersten und/oder einem dritten, zu dem ersten bzw. dritten Polymer der ersten und dritten Lage aushärtbaren Harz ermöglichen, und das Textil der ersten und der dritten Lage zumindest in den Bereichen, welche an den Durchdringungsbereichen der zweiten Lage zur Anlage kommen, mit dem zu dem ersten Polymer aushärtbaren ersten Harz bzw. mit dem zu dem dritten Polymer aushärtbaren dritten Harz imprägniert werden, wobei das erste Harz und das dritte Harz durch die Durchdringungsbereiche der zweiten Lage hindurch miteinander in Kontakt gebracht und unter Bildung kovalenter Bindungen durch die Durchdringungsbereiche der zweiten Lage hindurch zumindest teilweise zu dem ersten bzw. dem dritten Polymer ausgehärtet werden.

Zur Lösung des der Erfindung zugrunde liegenden Problems sieht die Erfindung bei einem gattungsgemäßen Panzerungselement ferner vor, daß das erste Polymer der ersten Lage mit dem dritten Polymer der dritten Lage bereichsweise kovalent gebunden ist, wobei die zwischen der ersten Lage und der dritten Lage angeordnete zweite Lage Durchdringungsbereiche aus dem ersten und/oder dem dritten Polymer aufweist.

Die erfindungsgemäße Ausgestaltung ermöglicht eine einfache und kostengünstige materialschlüssige Verbindung der verschiedenen Lagen des Panzerungselementes, indem jeweils zwei nicht aneinander angrenzende Lagen - die erste und die dritte Lage - durch die Durchdringungsbereiche der dazwischen angeordneten - zweiten - Lage hindurch durch gänzliches oder zumindest teilweises gemeinsames Aushärten der Harze der ersten und der dritten Lage unter Ausbildung gemeinsamer, kovalenter Bindungen miteinander verbunden werden. Die erfindungsgemäße Ausgestaltung ermöglicht insbesondere im Falle des Aufpralls eines Projektils mit einer vorgegebenen Aufprallenergie eine gewisse Delamimierung der auf die vorgenannte Weise miteinander verbundenen Lagen, so daß ein gegenüber einer unlösbaren Verbindung der Lagen erhöhtes Energieabsorptionsvermögen des Panzerungselementes nach Art des vorgenannten, sogenannten "Handtucheffektes" gewährleistet ist. Die einzelnen Lagen mit verschiedenen, insbesondere nicht miteinander kompatiblen Polymeren können jeweils alternierend oder auch derart angeordnet sein, daß mehrere Lagen desselben einen Polymers an eine oder mehrere Lagen desselben anderen Polymers angrenzen, wobei selbstverständlich auch fluchtende Durchdringungsbereiche durch mehrere Lagen desselben Polymers hindurch vorgesehen sein können.

Die Aushärtung der Harze, mit welchen die einzelnen Lagen imprägniert werden, kann auf beliebige bekannte Weise, z.B. unter Einsatz von Vernetzungsmitteln, mittels Wärmeeinwirkung, durch Bestrahlung mit elektromagnetischer Strahlung, z.B. im ultravioletten Bereich, im Infrarotbereich oder im Mikrowellen- oder Röntgenbereich, mit Teilchenstrahlung, z.B. mit Elektronenstrahlung (y-Strahlung), oder auf beliebige andere bekannte Weise geschehen. In jedem Fall ist die Erzeugung eines Panzerungselementes mit einem mehrlagigen, sandwichartigen bzw. laminatförmigen Aufbau möglich. Die Harze können selbstverständlich von im wesentlichen flüssigen, vernetzbaren Polymeren und/oder von vernetzbaren bzw. polymerisierbaren Mono-, Di-, und/oder Oligomeren gebildet sein. Mit "kompatiblen Polymeren" im Sinne der Erfindung sind um übrigen solche Polymere bzw. deren Prekursoren, wie Mono-, Di- oder Oligomere, angesprochen, welche zu einer chemischen Vernetzungs- bzw. Polymerisationsreaktion untereinander in der Lage und somit miteinander koppelbar sind.

Während die Harze einerseits gänzlich ausgehärtet werden können, kann je nach Anwendungsfall auch vorgesehen sein, daß die Harze nur teilweise ausgehärtet werden, so daß die an der erfindungsgemäßen Verbindung der ersten mit der dritten Lage und durch die zweite Lage hindurch beteiligten Polymere weiter aushärten können. Eine solche Ausgestaltung kann beispielsweise dann sinnvoll sein, wenn ein komplettes gepanzertes Verbundteil aus dem eigentlichen Panzerungselement selbst und einer Decklage, z.B. in Form eines gegebenenfalls bereits endlackierten Karosserieteils, hergestellt werden soll, wobei die das Karosserieteil bildende Blechstruktur mit dem Panzerungselement hinterfüttert und zumindest das noch nicht gänzlich ausgehärtete Harz an der an die Blechstruktur angrenzenden Oberfläche des Panzerungselementes unter Bewerkstelligung einer Verbindung mit der Blechstruktur im wesentlichen vollständig ausgehärtet wird.

In bevorzugter Ausführung ist vorgesehen, daß die Durchdringungsbereiche der zweiten Lage in Form von einer Mehrzahl an voneinander mit Abstand angeordneten Bereichen ausgebildet werden. Bei einem solchermaßen hergestellten Panzerungselement, dessen Durchdringungsbereiche der zweiten Lage in Form einer Mehrzahl an voneinander mit Abstand angeordneten Bereichen gebildet sind, ist eine zuverlässige Verbindung der einzelnen Lagen sichergestellt und läßt sich durch entsprechende Einstellung der Form, Größe und/oder Anzahl der Durchdringungsbereiche eine erwünschte Delaminierung der Lagen bei einer vorgegebenen Aufprallenergie eines Projektil einstellen. Die Durchdringungsbereiche der zweiten Lage können z.B. etwa matrixartig in Reihen und Spalten über die Fläche der zweiten Lage angeordnet sein.

Die Durchdringungsbereiche können grundsätzlich auf unterschiedliche Weise gebildet werden. So kann gemäß einer ersten bevorzugten Ausführungsvariante vorgesehen sein, daß die Durchdringungsbereiche der zweiten Lage in Form von nicht mit dem zweiten Polymer imprägnierten Bereichen des Textils der zweiten Lage ausgebildet werden. Das Textil der zweiten Lage wird folglich nicht gänzlich, sondern unter Aussparung der Durchdringungsbereiche mit dem zweiten Harz imprägniert, so daß das - offenporige - Textil in den Durchdringungsbereichen noch frei liegt und die Harze der ober- und unterhalb angeordneten - ersten und dritten - Lage unter Imprägnierung des Textils der zweiten Lage in den Durchdringungsbereichen gemeinsam miteinander vernetzt bzw. ausgehärtet werden können. Dies kann vor oder nach dem gänzlichen oder teilweisen Aushärten des Harzes der zweiten Lage mit den Durchdringungsbereichen geschehen. Die Durchdringungsbereiche der zweiten Lage sind bei einem solchermaßen hergestellten Panzerungselement folglich in Form von zumindest teilweise mit dem ersten und/oder dem dritten Polymer der ersten bzw. dritten Lage imprägnierten Bereichen des Textils der zweiten Lage gebildet.

Alternativ oder zusätzlich kann gemäß einer anderen bevorzugten Ausführungsform vorgesehen sein, daß die Durchdringungsbereiche der zweiten Lage in Form von diese Lage durchsetzenden Ausnehmungen ausgebildet werden. Im Falle einer solchen Vorgehensweise ist es aus Gründen einer hohen Festigkeit bzw. Zähigkeit des Panzerungselementes auch in den Durchdringungsbereichen von Vorteil, wenn in den Ausnehmungen der zweiten Lage Laschen angeordnet werden, welche mit dem ersten und/oder dem dritten Harz imprägniert werden, wobei die imprägnierten Laschen derart angeordnet werden, daß sie die erste mit der dritten Lage durch die Ausnehmungen hindurch verbinden. Das fertige Panzerungselement weist in diesem Fall folglich Durchdringungsbereiche der zweiten Lage in Form von diese Lage durchsetzenden Ausnehmungen auf, die von den Laschen durchsetzt sind, welche mit dem Polymer der ersten und/oder der dritten Lage imprägniert sind und die erste mit der dritten Lage verbinden.

Die Ausbildung der Laschen kann einerseits durch Ausschneiden derselben aus dem Textil der ersten Lage und/oder der dritten Lage vor Imprägnierung derselben mit dem jeweiligen Harz geschehen. Andererseits können separate Laschen, insbesondere aus einem Textil, verwendet werden. Insbesondere letztere Alternative gibt die Möglichkeit, die Dicke des Textils der eingesetzten Laschen derart zu wählen, daß die hiermit verbundenen Lagen mit einem gewissen Abstand voneinander angeordnet sind, wobei der Zwischenraum - z.B. zwischen der ersten und der zweiten und/oder zwischen der zweiten und der dritten Lage - frei bleibt oder mit einem insbesondere weichen Füllmaterial befüllt wird, welches dem Panzerungselement zusätzliche Absorptionseigenschaften zum Schutz vor eindringenden Projektilen verleihen kann.

Überdies können solche Laschen auch außenseitig an wenigstens einer äußeren Lage des Panzerungselementes angeordnet werden, um als mechanische Verbindungselemente des Panzerungselementes, z.B. an der Karosserie eines Kraftfahrzeugs, an einem Gebäude oder dergleichen, zu dienen.

In Weiterbildung kann zur Herstellung eines Panzerungselementes mit wenigstens vier im wesentlichen parallel angeordneten Lagen aus je einem mit wenigstens einem aushärtenden und/oder ausgehärteten Polymer imprägnierten Textil, wobei wenigstens eine vierte Lage mit einem vierten Polymer imprägniert ist, welches mit dem zweiten Polymer der zweiten Lage identisch oder verschieden, aber mit diesem kompatibel ist, wobei die erste und/oder die dritte Lage unmittelbar oder mittelbar zwischen der zweiten und der vierten Lage angeordnet ist bzw. sind, vorgesehen sein, daß auch das zweite Polymer der zweiten Lage mit dem vierten Polymer der vierten Lage bereichsweise kovalent verbunden wird, indem die zwischen der zweiten Lage und der vierten Lage angeordnete erste und/oder dritte Lage mit Durchdringungsbereichen versehen wird, welche ein Durchdringen der ersten und/oder dritten Lage mit dem zweiten und/oder einem vierten, zu dem zweiten bzw. vierten Polymer der zweiten und vierten Lage aushärtbaren Harz ermöglichen, und das Textil der zweiten und der vierten Lage zumindest in den Bereichen, welche an den Durchdringungsbereichen der ersten und/oder zweiten Lage zur Anlage kommen, mit dem zu dem zweiten Polymer aushärtbaren zweiten Harz bzw. mit dem zu dem vierten Polymer aushärtbaren vierten Harz imprägniert werden, wobei das zweite Harz und das vierte Harz durch die Durchdringungsbereiche der ersten und/oder dritten Lage hindurch miteinander in Kontakt gebracht und unter Bildung kovalenter Bindungen durch die Durchdringungsbereiche der ersten und/oder dritten Lage hindurch zumindest teilweise zu dem zweiten bzw. dem vierten Polymer ausgehärtet werden. Es werden folglich auf die weiter oben genannte Weise sowohl die erste und dritte und gegebenenfalls fünfte, siebte etc. Lage als auch die zweite und vierte und gegebenenfalls sechste, achte etc. Lage materialschlüssig miteinander verbunden, so daß z.B. im Falle des Einsatzes zweier verschiedener Polymere jeweils alternierend angeordneter Lagen jede Lage Durchdringungsbereiche aufweist, welche von dem Polymer der beiden jeweils angrenzenden Lagen durchdrungen ist und die beiden angrenzenden Lagen durch diese Lage hindurch kovalent miteinander verbinden.

Wie bereits erwähnt, gibt die Erfindung insbesondere die Möglichkeit, für die einzelnen Lagen des Panzerungselementes Polymere bzw. zu solchen aushärtbare Harze mit unterschiedlicher Härte einzusetzen, so daß die ausgehärteten Polymere zumindest einiger Lagen des erfindungsgemäßen Panzerungselementes eine unterschiedliche Härte aufweisen, wie es zur Absorption der kinetischen Energie eines aufprallenden Projektils günstig ist. Ferner kann die Härte eines für mehrere Lagen verwendeten Polymers, welches durch Aushärten ein und desselben Harzes erhalten worden ist, selbstverständlich in an sich bekannter Weise auch dadurch variiert werden, indem der Vernetzungsgrad durch geeignete Inhibitoren bzw. Beschleuniger oder andersartig, wie durch Variation der Aushärtungstemperatur, durch Bestrahlung etc., variiert wird.

In Weiterbildung kann vorgesehen sein, daß in das Harz wenigstens einer Lage vor dem Aushärten dieses Harzes zu dem jeweiligen Polymer Füllstoffe eindispergiert werden. Das fertige Panzerungselement enthält dann in zumindest einem Polymer wenigstens einer Lage hierin eindispergierte Füllstoffe, wobei es beispielsweise von Vorteil sein kann, insbesondere in der oder den äußeren Lage(n) des Panzerungselementes Füllstoffe aus gegenüber den Imprägnier-Polymeren härteren Materialien, z.B. Siliciumcarbid (SiC) oder anderen keramischen, mineralischen oder metallischen Materialien, einzusetzen.

Schließlich kann alternativ oder zusätzlich vorgesehen sein, daß wenigstens eine äußere Lage des Panzerungselementes mit einer eine Oberflächenstruktur aufweisenden Außenschicht versehen wird, wobei die Außenschicht z.B. oberflächig auf die äußere Lage aus mit einem ausgehärteten Polymer imprägnierten Textil aufgebracht und vorzugsweise eine deformierbare Oberflächenstruktur, z.B. in Form von Wellen, Waben, Gittern, matrixartig angeordneten Erhebungen oder dergleichen, aufweisen kann, welche durch ein unmittelbar auftreffendes Projektil deformiert wird und letzteres dadurch anfänglich abbremst, bevor es in die darunterliegende, äußere Lage aus Textil/Polymer eintritt. Stattdessen kann, wie bereits angedeutet, auch eine glatte, lackier- oder streichfähige Außenschicht vorgesehen oder die äußere Lage aus Textil/Polymer glatt und lackier- oder streichfähig ausgebildet sein, so daß das Panzerungselement selbst - z.B. im Falle der Anordnung in einem Kraftfahrzeug - zumindest einen Teil der Sichtfläche bilden kann.

Nachstehend ist die Erfindung anhand von Ausführungsbeispielen unter Bezugnahme auf die Zeichnung näher erläutert. Dabei zeigen:
- Fig. 1: eine erste Ausführungsform eines erfindungsgemä- β en Panzerungselementes während seiner Herstel- lung in schematischer Darstellung;
- Fig. 2: eine zweite Ausführungsform eines erfindungsgemä- β en Panzerungselementes während seiner Herstel- lung in schematischer Darstellung; und
- Fig. 3: eine dritte Ausführungsform eines erfindungsgemä- β en Panzerungselementes während seiner Herstel- lung in schematischer Darstellung.

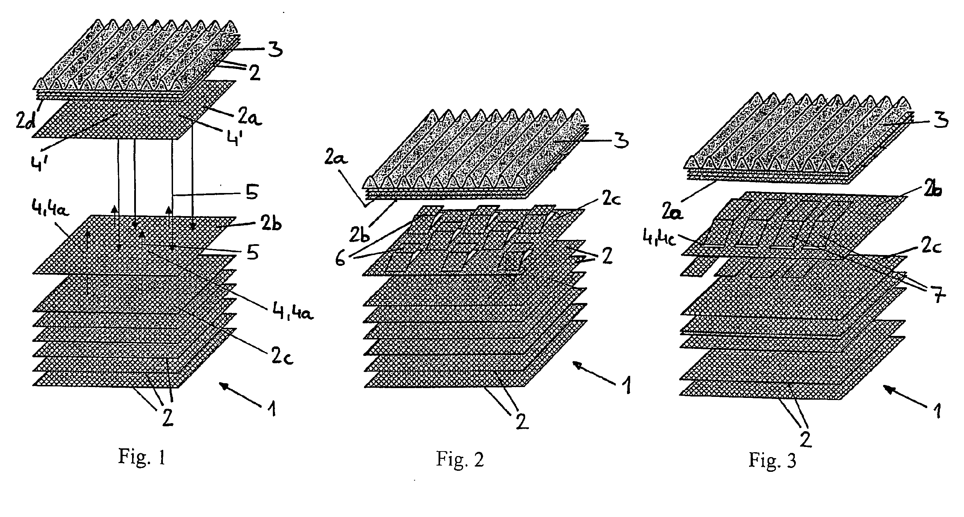

In Fig. 1 bis 3 ist jeweils eine Ausführungsform eines erfindungsgemäßen Panzerungselementes 1 in einem Herstellungsstadium dargestellt, an welchem eine erste Lage 2a und eine dritte Lage 2c unter Durchdringen einer zwischen diesen angeordneten Lage 2b miteinander verbunden werden. Das Panzerungselement 1 weist beim vorliegenden Ausführungsbeispiel jeweils etwa zehn Lagen 2 auf, wobei es je nach Anwendung selbstverständlich auch mit mehr oder weniger Lagen 2 ausgebildet werden kann. Jede Lage 2 des fertigen (nicht dargestellt) Panzerungselementes 1 besteht aus einem Textil, beispielsweise aus einem von Aramidfasern gebildeten Gewebe, welches mit einem ausgehärteten Polymer imprägniert ist. An der - in Fig. 1 bis 3 oberen - Außenseite ist ferner eine Außenschicht 3 angebracht, welche mit einer hier etwa wellenförmigen, deformierbaren Oberflächenstruktur versehen ist und beispielsweise vor dem Aushärten auf das noch flüssige Harz der oberen Lage 2 aufgebracht werden kann, um nach der Aushärtung für eine Anbindung an die obere Lage 2 zu sorgen.

Zum Zwecke eines besseren Verständnisses ist jeweils nur die Verbindung der "ersten" Lage 2a (z.B. in Fig. 1: vierte Lage von oben unterhalb der Außenschicht 3) mit der "dritten" Lage 2c (z.B. in Fig. 1: sechste Lage von oben unterhalb der Außenschicht 3) unter Durchdringung der "zweiten" Lage 2b (z.B. in Fig. 1: fünfte Lage von oben unterhalb der Außenschicht 3) wiedergegeben, wobei zur Imprägnierung der ersten 2a und der dritten Lage 2c dasselbe Harzsystem oder verschiedene, miteinander kompatible bzw. miteinander vernetzbare Harzsysteme vorgesehen sind, während für die zweite Lage 2b ein hiermit nicht kompatibles Harzsystem vorgesehen ist. Selbstverständlich ist es auch möglich, daß zwischen der "ersten" 2a und der "dritten" Lage 2c mehrere - mit dem Harz derselben zu durchdringende - "zweite" Lagen 2b angeordnet werden, wie auch mehrere Lagen mit demselben Harz ober- und/oder unterhalb der "zweiten" Lage 2b angeordnet werden können. Ferner können selbstverständlich auch einige, einfach oder zwei- bzw. mehrfach übereinander positionierte, alternierend angeordnete Lagen 2 mit verschiedenen Harzen vorgesehen sein, wobei z.B. die Lagen I, III, V etc. ebenso mittels Durchdringung der dazwischen angeordneten Lagen II, IV, VI etc. miteinander verbunden sind wie die Lagen II, IV, VI etc. mittels Durchdringung der Lagen I, III, V etc. miteinander verbunden sind. Als Beispiel für ein Harz der ersten 2a und dritten Lage 2c seien zu einem - harten - duroplastischen Epoxidharz aushärtbare Flüssigharze genannt, während als Beispiel für ein Harz der zweiten Lage 2b zu einem - demgegenüber erheblich weicheren - elastischen Silikonharz aushärtbare Flüssigharze (erhältlich z.B. unter dem Handelsnamen Elastosil RT625^{™}, Siligel^{™} usw.) erwähnt sei. Ferner können in die eingesetzten Harze zumindest einiger Lagen 2 Füllstoffpartikel eindispergiert werden, um den Eindringwiderstand gegen ein Projektil noch zu erhöhen.

Die Ausführungsformen gemäß Fig. 1 bis 3 unterscheiden sich insbesondere durch die Verbindungsweise der Lagen 2, wobei in jedem Fall das erste Polymer der ersten Lage 2a mit dem - z.B. identischen, gleich oder unterschiedlich stark vernetzten oder auch verschiedenen, aber kompatiblen - dritten Polymer der dritten Lage 2c bereichsweise kovalent verbunden wird, indem die zwischen der ersten Lage 2a und der dritten Lage 2c angeordnete zweite Lage 2b mit Durchdringungsbereichen 4 versehen wird, welche ein Durchdringen der zweiten Lage 2c mit dem ersten und dritten, zu dem ersten bzw. dritten Polymer der ersten 2a und dritten Lage 2c aushärtbaren Harz ermöglichen, und das Textil der ersten 2a und der dritten Lage 2c zumindest in den Bereichen, welche an den Durchdringungsbereichen 4 der zweiten Lage 2b zur Anlage kommen, mit dem zu dem ersten Polymer aushärtbaren ersten Harz bzw. mit dem zu dem dritten Polymer aushärtbaren dritten Harz imprägniert werden, wobei das erste Harz und das dritte Harz durch die Durchdringungsbereiche 4 der zweiten Lage 2b hindurch miteinander in Kontakt gebracht und unter Bildung kovalenter Bindungen durch die Durchdringungsbereiche 4 der zweiten Lage 2b hindurch zu dem ersten bzw. dem dritten Polymer ausgehärtet werden.

Bei dem in Fig. 1 wiedergegebenen Panzerungselement 1 werden die Durchdringungsbereiche 4 der zweiten Lage 2b dadurch ausgebildet, indem das Textil dieser Lage 2b nur bereichsweise mit dem jeweiligen Harz imprägniert wird und eine Mehrzahl von mit Abstand, z.B. matrixartig in Reihen und Spalten angeordneter Durchdringungsbereiche 4a freigelassen wird, so daß das offenporige Textil der zweiten Lage 2b in diesen Bereichen 4a mit dem noch flüssigen Harz der angrenzenden Lagen 2a, 2c durchdrungen bzw. imprägniert werden kann. Sodann werden - vor oder nach gänzlichem oder teilweisen Aushärten des Harzes der zweiten Lage 2b zu dem ausgehärteten Polymer - die Lagen 2a und 2c nach Imprägnieren mit dem jeweiligen, mit dem der Lage 2b nicht oder nur schlecht kompatiblen Harz jeweils in Richtung der Pfeile 5 von oben und unten an die Lage 2b angedrückt, so daß die noch flüssigen Harze durch die Durchdringungsbereiche 4a der zweiten Lage 2b hindurch miteinander in Kontakt treten können und die Bereiche 4a vorzugsweise im wesentlichen vollständig imprägnieren. Schließlich werden die Harze der ersten 2a und dritten Lage 2c zu dem jeweiligen Polymer ausgehärtet, wobei eine kovalente Bindung durch die Durchdringungsbereiche 4a hindurch zustande kommt.

in Fig. 1 sind ferner Durchdringungsbereiche 4' in der ersten Lage 2a angedeutet, welche bezüglich den Durchdringungsbereichen 4 der zweiten Lage 2b versetzt, im übrigen aber auf ähnliche Weise angeordnet sind. Auf diese Weise läßt sich z.B. auf die vorstehend genannte Art auch die zweite Lage 2b mit der oberhalb der ersten Lage 2a angeordnete Lage - einer "vierten" Lage 2d - verbinden.

Bei dem Ausführungsbeispiel gemäß Fig. 2 werden die Durchdringungsbereiche 4 der zweiten Lage 2b dadurch ausgebildet, indem die gesamte Lage 2b - vor oder nach gänzlichem oder teilweisen Aushärten des Harzes der zweiten Lage 2b zu dem ausgehärteten Polymer oder auch bereits das noch nicht imprägnierte Textil dieser Lage 2b - mit die Lage 2b durchsetzenden Ausnehmungen (in Fig. 2 nicht erkennbar; vgl. Bezugszeichen 4c der Fig. 3) versehen wird, welche wiederum etwa matrixartig über die Fläche der zweiten Lage 2b angeordnet werden können und vorzugsweise eine etwa schlitzartige Form besitzen. Die (in Fig. 2 nicht erkennbaren) Schlitze dienen zum Durchführen von Laschen 6, welche im vorliegenden Fall aus der angrenzenden Lage (hier: der unteren "dritten" Lage 2c) ausgeschnitten und durch die Schlitze hindurch mit der oberen "ersten" Lage 2a in Kontakt gebracht werden. Nach Aushärten des Harzes, mit welchem die Lagen 2a, 2c einschließlich der aus letzterer ausgeschnittenen Laschen 6 imprägniert worden sind, ergibt sich wiederum eine kovalente Bindung zwischen dem Polymer der ersten 2a und der dritten Lage 2c durch die zweiten Lage 2b hindurch.

Das in Fig. 3 gezeigte Ausführungsbeispiel unterscheidet sich von dem gemäß Fig. 2 dadurch, daß die durch die von Schlitzen 4c gebildeten Durchdringungsbereiche 4 der zweiten Lage 2b durchgefädelten Laschen 7 von separaten Textilstreifen gebildet sind. Nach Imprägnieren der ersten 2a und der dritten Lage 2c sowie der Laschen 7 mit dem jeweiligen Harz werden die Laschen 7 in der aus Fig. 3 ersichtlichen Form durch die schlitzförmigen Durchdringungsbereiche 4 der zweiten Lage 2 hindurchgefädelt und werden die Lagen 2a, 2c jeweils an die dazwischen angeordneten Lage 2b angedrückt. Nach Aushärtung ergibt sich gleichfalls eine kovalente Bindung der Lagen 2a, 2c durch die Durchdringungsbereiche 4c der Lage 2b hindurch.

Zusätzlich ist es beispielsweise auch möglich, daß zumindest einige benachbarte Lagen 2 des Panzerungselementes 1, welche insbesondere gleiche oder miteinander kompatible Polymere aufweisen, mittels imprägnierter Laschen miteinander verbunden werden, wobei solche Laschen z.B. entsprechend den Laschen 6 gemäß Fig. 2 aus der einen oder beiden benachbarten Lagen 2 ausgeschnitten oder zusätzliche Laschen 7 entsprechend Fig. 3 vorgesehen werden können. Eine kovalente Verbindung der solchermaßen miteinander verbundenen Lagen 2 läßt sich wiederum durch gemeinsames Aushärten der Imprägnierharze der Lagen 2 mit denen der Laschen 6 bzw. 7 erreichen. Auf diese Weise lassen sich auch benachbarte Lagen 2, welche mit denselben oder miteinander kompatiblen Polymeren imprägniert sind, nicht notwendigerweise flächig, sondern auch unter einem gewissen Abstand miteinander verbinden, was im Hinblick auf das Energieabsorptionsvermögen des Panzerungselementes 1 günstig sein kann. Insbesondere lassen sich in Verbindung mit der erfindungsgemäßen Durchdringung zumindest einiger Lagen 2 unterschiedlich harte bzw. weiche Bereiche des Panzerungselementes 1 vorsehen, deren Lagen 2 entweder mit Abstand voneinander angeordnet und/oder im Falle des Aufpralls eines Projektils mit einer bestimmten Aufprallenergie gezielt delaminiert werden können.

## Patentansprüche

1. Verfahren zur Herstellung eines Panzerungselementes (1) mit wenigstens drei im wesentlichen parallel angeordneten Lagen (2) aus je einem mit wenigstens einem aushärtenden und/oder ausgehärteten Polymer imprägnierten Textil, wobei wenigstens eine erste Lage (2a) mit einem ersten Polymer und wenigstens eine dritte Lage (2c) mit einem dritten Polymer imprägniert sind, wobei das erste und das dritte Polymer identisch oder verschieden, aber miteinander kompatibel sind, während wenigstens eine unmittelbar oder mittelbar zwischen der ersten (2a) und der dritten Lage (2c) angeordnete zweite Lage (2b) mit einem von dem ersten Polymer der ersten Lage (2a) und dem der dritten (2c) Lage verschiedenen, insbesondere nicht oder nur schlecht mit dem ersten und dritten Polymer kompatiblen zweiten Polymer imprägniert ist, **dadurch gekennzeichnet, daß** das erste Polymer der ersten Lage (2a) mit dem dritten Polymer der dritten Lage (2c) bereichsweise kovalent verbunden wird, indem die zwischen der ersten Lage (2a) und der dritten Lage (2c) angeordnete zweite Lage (2b) mit Durchdringungsbereichen (4) versehen wird, welche ein Durchdringen der zweiten Lage (2b) mit einem ersten und/oder einem dritten, zu dem ersten bzw. dritten Polymer der ersten (2a) und dritten Lage (2c) aushärtbaren Harz ermöglichen, und das Textil der ersten (2a) und der dritten Lage (2c) zumindest in den Bereichen, welche an den Durchdringungsbereichen (4) der zweiten Lage (2b) zur Anlage kommen, mit dem zu dem ersten Polymer aushärtbaren ersten Harz bzw. mit dem zu dem dritten Polymer aushärtbaren dritten Harz imprägniert werden, wobei das erste Harz und das dritte Harz durch die Durchdringungsbereiche (4) der zweiten Lage (2b) hindurch miteinander in Kontakt gebracht und unter Bildung kovalenter Bindungen durch die Durchdringungsbereiche (4) der zweiten Lage (2b) hindurch zumindest teilweise zu dem ersten bzw. dem dritten Polymer ausgehärtet werden.

2. Verfahren nach Anspruch 1, **dadurch gekennzeichnet, daß** die Durchdringungsbereiche (4) der zweiten Lage (2b) in Form einer Mehrzahl an voneinander mit Abstand angeordneten Bereichen ausgebildet werden.

3. Verfahren nach Anspruch 1 oder 2, **dadurch gekennzeichnet, daß** die Durchdringungsbereiche (4) der zweiten Lage (2b) in Form von nicht mit dem zweiten Polymer imprägnierten Bereichen (4a) des Textils der zweiten Lage (2b) ausgebildet werden.

4. Verfahren nach Anspruch 1 oder 2, **dadurch gekennzeichnet, daß** die Durchdringungsbereiche (4) der zweiten Lage (2b) in Form von diese Lage (2b) durchsetzenden Ausnehmungen (4c) ausgebildet werden.

5. Verfahren nach Anspruch 4, **dadurch gekennzeichnet, daß** in den Ausnehmungen (4c) der zweiten Lage (2b) Laschen (6, 7) angeordnet werden, welche mit dem ersten und/oder dem dritten Harz imprägniert werden, wobei die imprägnierten Laschen (6, 7) derart angeordnet werden, daß sie die erste (2a) mit der dritten Lage (2c) durch die Ausnehmungen (4c) hindurch verbinden.

6. Verfahren nach Anspruch 5, **dadurch gekennzeichnet, daß** die Laschen (6) aus dem Textil der ersten Lage (2a) und/oder der dritten Lage (2c) ausgeschnitten werden.

7. Verfahren nach Anspruch 5, **dadurch gekennzeichnet, daß** die separate Laschen (7) verwendet werden.

8. Verfahren nach einem der Ansprüche 1 bis 7 zur Herstellung eines Panzerungselementes (1) mit wenigstens vier im wesentlichen parallel angeordneten Lagen (2) aus je einem mit wenigstens einem aushärtenden und/oder ausgehärteten Polymer imprägnierten Textil, wobei wenigstens eine vierte Lage (2d) mit einem vierten Polymer imprägniert ist, welches mit dem zweiten Polymer der zweiten Lage (2b) identisch oder verschieden, aber mit diesem kompatibel ist, wobei die erste (2a) und/oder die dritte Lage (2a) unmittelbar oder mittelbar zwischen der zweiten (2b) und der vierten Lage (2d) angeordnet ist bzw. sind, **dadurch gekennzeichnet, daß** auch das zweite Polymer der zweiten Lage (2b) mit dem vierten Polymer der vierten Lage (2d) bereichsweise kovalent verbunden wird, indem die zwischen der zweiten Lage (2b) und der vierten Lage (2d) angeordnete erste (2a) und/oder dritte Lage (2c) mit Durchdringungsbereichen (4') versehen wird, welche ein Durchdringen der ersten (2a) und/oder dritten Lage (2c) mit dem zweiten und/oder einem vierten, zu dem zweiten bzw. vierten Polymer der zweiten (2b) und vierten Lage (2d) aushärtbaren Harz ermöglichen, und das Textil der zweiten (2b) und der vierten Lage (2d) zumindest in den Bereichen, welche an den Durchdringungsbereichen (4') der ersten (2a) und/oder zweiten Lage (2c) zur Anlage kommen, mit dem zu dem zweiten Polymer aushärtbaren zweiten Harz bzw. mit dem zu dem vierten Polymer aushärtbaren vierten Harz imprägniert werden, wobei das zweite Harz und das vierte Harz durch die Durchdringungsbereiche (4') der ersten (2a) und/oder dritten Lage (2c) hindurch miteinander in Kontakt gebracht und unter Bildung kovalenter Bindungen durch die Durchdringungsbereiche (4') der ersten (2a) und/oder dritten Lage (1c) hindurch zumindest teilweise zu dem zweiten bzw. dem vierten Polymer ausgehärtet werden.

9. Verfahren nach Anspruch 8, **dadurch gekennzeichnet, daß** die Verbindung der zweiten (2b) mit der vierten Lage (2d) entsprechend der Verbindung der ersten (2a) mit der dritten Lage (2c) gemäß den Merkmalen wenigstens eines der Ansprüche 2 bis 7 durchgeführt wird.

10. Verfahren nach einem der Ansprüche 1 bis 9, **dadurch gekennzeichnet, daß** Polymere bzw. zu solchen aushärtbare Harze mit unterschiedlicher Härte eingesetzt werden.

11. Verfahren nach einem der Ansprüche 1 bis 10, **dadurch gekennzeichnet, daß** in das Harz wenigstens einer Lage (2) vor dem Aushärten dieses Harzes zu dem jeweiligen Polymer Füllstoffe eindispergiert werden.

12. Verfahren nach einem der Ansprüche 1 bis 11, **dadurch gekennzeichnet, daß** wenigstens eine äußere Lage (2) des Panzerungselementes (1) mit einer eine Oberflächenstruktur aufweisenden Außenschicht (3) versehen wird.

13. Panzerungselement (1) mit wenigstens drei im wesentlichen parallel angeordneten Lagen (2) aus je einem mit wenigstens einem aushärtenden und/oder ausgehärteten Polymer imprägnierten Textil, wobei wenigstens eine erste Lage (2a) mit einem ersten Polymer und wenigstens eine dritte Lage (2c) mit einem dritten Polymer imprägniert sind, wobei das erste und das dritte Polymer identisch oder verschieden, aber miteinander kompatibel sind, während wenigstens eine unmittelbar oder mittelbar zwischen der ersten (2a) und der dritten Lage (2c) angeordnete zweite Lage (2b) mit einem von dem ersten Polymer der ersten Lage (2a) und dem der dritten Lage (2c) verschiedenen, insbesondere nicht oder nur schlecht mit dem ersten und dritten Polymer kompatiblen zweiten Polymer imprägniert ist, **dadurch** gekennzeich net, daß das erste Polymer der ersten Lage (2a) mit dem dritten Polymer der dritten Lage (2c) bereichsweise kovalent gebunden ist, wobei die zwischen der ersten Lage (2a) und der dritten Lage (2c) angeordnete zweite Lage
(2b) Durchdringungsbereiche (4) aus dem ersten und/oder dem dritten Polymer aufweist.

14. Panzerungselement nach Anspruch 13, **dadurch gekennzeichnet, daß** die Durchdringungsbereiche (4) der zweiten Lage (2b) in Form einer Mehrzahl an voneinander mit Abstand angeordneten Bereichen gebildet sind.

15. Panzerungselement nach Anspruch 13 oder 14, **dadurch gekennzeichnet, daß** die Durchdringungsbereiche (4) der zweiten Lage (2b) in Form von zumindest teilweise mit dem ersten und/oder dem dritten Polymer der ersten (2a) bzw. dritten Lage (2c) imprägnierten Bereichen (4a) des Textils der zweiten Lage (2b) gebildet sind.

16. Panzerungselement nach Anspruch 13 oder 14, **dadurch gekennzeichnet, daß** die Durchdringungsbereiche (4) der zweiten Lage (2b) in Form von diese Lage (2b) durchsetzenden Ausnehmungen (4c) gebildet sind, die von Laschen (6, 7) durchsetzt sind, welche mit dem Polymer der ersten (2a) und/oder der dritten Lage (2c) imprägniert sind und die erste (2a) mit der dritten Lage (2c) verbinden.

17. Panzerungselement nach Anspruch 16, **dadurch gekennzeichnet, daß** die Laschen (6) aus dem Textil der ersten Lage (2a) und/oder der dritten Lage (2c) ausgeschnitten sind.

18. Panzerungselement nach Anspruch 16, **dadurch gekennzeichnet, daß** die Laschen (7) aus separaten Elementen, insbesondere in Form eines Textils, gebildet sind.

19. Panzerungselement nach einem der Ansprüche 13 bis 18 mit wenigstens vier im wesentlichen parallel angeordneten Lagen (2) aus je einem mit wenigstens einem aushärtenden und/oder ausgehärteten Polymer imprägnierten Textil, wobei wenigstens eine vierte Lage (2d) mit einem vierten Polymer imprägniert ist, welches mit dem zweiten Polymer der zweiten Lage (2b) identisch oder verschieden, aber mit diesem kompatibel ist, wobei die erste (2a) und/oder die dritte Lage (2c) unmittelbar oder mittelbar zwischen der zweiten (2b) und der vierten Lage (2d) angeordnet ist bzw. sind, **dadurch gekennzeichnet, daß** auch das zweite Polymer der zweiten Lage (2b) mit dem vierten Polymer der vierten Lage (2d) bereichsweise kovalent gebunden ist, wobei die zwischen der zweiten Lage (2b) und der vierten Lage (2d) angeordnete erste (2a) und/oder dritte Lage (2c) Durchdringungsbereiche (4') aus dem zweiten und/oder dem vierten Polymer aufweist.

20. Panzerungselement nach Anspruch 19, **dadurch gekennzeichnet, daß** die Verbindung der zweiten (2b) mit der vierten Lage (2d) entsprechend der Verbindung der ersten (2a) mit der dritten Lage (2c) gemäß den Merkmalen wenigstens eines der Ansprüche 14 bis 18 ausgebildet ist.

21. Panzerungselement nach einem der Ansprüche 13 bis 20, **dadurch gekennzeichnet, daß** die Polymere zumindest einiger Lagen (2) eine unterschiedliche Härte aufweisen.

22. Panzerungselement nach einem der Ansprüche 13 bis 21, **dadurch gekennzeichnet, daß** das Polymer wenigstens einer Lage (2) hierin eindispergierte Füllstoffe enthält.

23. Panzerungselement nach einem der Ansprüche 13 bis 22, **dadurch gekennzeichnet, daß** wenigstens eine äußere Lage (2) des Panzerungselementes (1) mit einer eine Oberflächenstruktur aufweisenden Außenschicht (3) ausgestattet ist.

## Claims

1. A method for producing an armouring element (1) having at least three substantially parallel plies (2) each of a textile impregnated with at least one curing and/or cured polymer, at least a first ply (2a) being impregnated with a first polymer and at least a third ply (2c) being impregnated with a third polymer, the first and the third polymers being identical or different but compatible with one another, while at least a second ply (2b) arranged directly or indirectly between the first ply (2a) and the third ply (2c) is impregnated with a second polymer different from the first polymer of the first ply (2a) and that of the third ply (2c) and in particular incompatible or only poorly compatible with the first and third polymers, **characterised in that** the first polymer of the first ply (2a) is covalently bonded in zones with the third polymer of the third ply (2c), the second ply (2b) arranged between the first ply (2a) and the third ply (2c) being provided with penetration zones (4), which allow penetration of the second ply (2b) with a first and/or a third resin curable to yield respectively the first or third polymer of the first ply (2a) and third ply (2c), and the textile of the first ply (2a) and the third ply (2c) being impregnated, at least in the zones which come to rest against the penetration zones (4) of the second ply (2b), respectively with the first resin curable to yield the first polymer or with the third resin curable to yield the third polymer, the first resin and the third resin being brought into contact with one another through the penetration zones (4) of the second ply (2b) and being cured at least in part to yield the first or third polymer respectively, with covalent bonds being formed through the penetration zones (4) of the second ply (2b).

2. A method according to claim 1, **characterised in that** the penetration zones (4) of the second ply (2b) take the form of a plurality of zones arranged spaced from one another.

3. A method according to claim 1 or claim 2, **characterised in that** the penetration zones (4) of the second ply (2b) take the form of zones (4a) of the textile of the second ply (2b) not impregnated with the second polymer.

4. A method according to claim 1 or claim 2, **characterised in that** the penetration zones (4) of the second ply (2b) take the form of openings (4c) passing through said ply (2b).

5. A method according to claim 4, **characterised in that** tabs (6, 7) are arranged in the openings (4c) of the second ply (2b), which tabs (6, 7) are impregnated with the first and/or the third resin, the impregnated tabs (6, 7) being arranged such that they bond the first ply (2a) to the third ply (2c) through the openings (4c).

6. A method according to claim 5, **characterised in that** the tabs (6) are cut out from the textile of the first ply (2a) and/or the third ply (2c).

7. A method according to claim 5, **characterised in that** separate tabs (7) are used.

8. A method according to any one of claims 1 to 7, for producing an armouring element (1) having at least four substantially parallel plies (2) each of a textile impregnated with at least one curing and/or cured polymer, at least a fourth ply (2d) being impregnated with a fourth polymer, which is identical to or different from the second polymer of the second ply (2b) but is compatible therewith, the first ply (2a) and/or the third ply (2c) being arranged directly or indirectly between the second ply (2b) and the fourth ply (2d), **characterised in that** the second polymer of the second ply (2b) is also covalently bonded in zones with the fourth polymer of the fourth ply (2d), the first ply (2a) and/or third ply (2c) arranged between the second ply (2b) and the fourth ply (2d) being provided with penetration zones (4'), which allow penetration of the first ply (2a) and/or third ply (2c) with the second and/or a fourth resin curable to yield respectively the second or fourth polymer of the second ply (2b) and fourth ply (2d), and the textile of the second ply (2b) and the fourth ply (2d) being impregnated, at least in the zones which come to rest against the penetration zones (4') of the first ply (2a) and/or second ply (2b), respectively with the second resin curable to yield the second polymer or with the fourth resin curable to yield the fourth polymer, the second resin and the fourth resin being brought into contact with one another through the penetration zones (4') of the first ply (2a) and/or third ply (2c) and being cured at least in part to yield the second or fourth polymer respectively, with covalent bonds being formed through the penetration zones (4') of the first ply (2a) and/or third ply (2c).

9. A method according to claim 8, **characterised in that** the bond between the second ply (2b) and the fourth ply (2d) is achieved in accordance with the bond between the first ply (2a) and the third ply (2c) according to the features of at least one of claims 2 to 7.

10. A method according to any one of claims 1 to 9, **characterised in that** the polymers used or the resins curable to yield such exhibit different hardnesses.

11. A method according to any one of claims 1 to 10, **characterised in that** fillers are dispersed into the resin of at least one ply (2) prior to curing of said resin to yield the respective polymer.

12. A method according to any one of claims 1 to 11, **characterised in that** at least one outer ply (2) of the armouring element (1) is provided with an outer layer (3) comprising a surface structure.

13. An armouring element (1) having at least three substantially parallel plies (2) each of a textile impregnated with at least one curing and/or cured polymer, at least a first ply (2a) being impregnated with a first polymer and at least a third ply (2c) being impregnated with a third polymer, the first and the third polymers being identical or different but compatible with one another, while at least a second ply (2b) arranged directly or indirectly between the first ply (2a) and the third ply (2c) is impregnated with a second polymer different from the first polymer of the first ply (2a) and that of the third ply (2c) and in particular incompatible or only poorly compatible with the first and third polymers, **characterised in that** the first polymer of the first ply (2a) is covalently bonded in zones with the third polymer of the third ply (2c), the second ply (2b) arranged between the first ply (2a) and the third ply (2c) comprising penetration zones (4) of the first and/or the third polymers.

14. An armouring element according to claim 13, **characterised in that** the penetration zones (4) of the second ply (2b) take the form of a plurality of zones arranged spaced from one another.

15. An armouring element according to claim 13 or claim 14, **characterised in that** the penetration zones (4) of the second ply (2b) take the form of zones (4a) of the textile of the second ply (2b) impregnated at least in part with the first and/or third polymer of the first ply (2a) or third ply (2c) respectively.

16. An armouring element according to claim 13 or claim 14, **characterised in that** the penetration zones (4) of the second ply (2b) take the form of openings (4c) passing through said ply (2b), through which pass tabs (6, 7) which are impregnated with the polymer of the first ply (2a) and/or of the third ply (2c) and bond the first ply (2a) to the third ply (2c).

17. An armouring element according to claim 16, **characterised in that** the tabs (6) are cut out from the textile of the first ply (2a) and/or the third ply (2c).

18. An armouring element according to claim 16, **characterised in that** the tabs (7) are made of separate elements, in particular in the form of a textile.

19. An armouring element according to any one of claims 13 to 18 having at least four substantially parallel plies (2) each of a textile impregnated with at least one curing and/or cured polymer, at least a fourth ply (2d) being impregnated with a fourth polymer, which is identical to or different from the second polymer of the second ply (2b) but is compatible therewith, the first ply (2a) and/or the third ply (2c) being arranged directly or indirectly between the second ply (2b) and the fourth ply (2d), **characterised in that** the second polymer of the second ply (2b) is also covalently bonded in zones with the fourth polymer of the fourth ply (2d), the first ply (2a) and/or third ply (2c) arranged between the second ply (2b) and the fourth ply (2d) comprising penetration zones (4') of the second and/or fourth polymer.

20. An armouring element according to claim 19, **characterised in that** the bond between the second ply (2b) and the fourth ply (2d) is achieved in accordance with the bond between the first ply (2a) and the third ply (2c) according to the features of at least one of claims 14 to 18.

21. An armouring element according to any one of claims 13 to 20, **characterised in that** the polymers of at least some of the plies (2) have different hardnesses.

22. An armouring element according to any one of claims 13 to 21, **characterised in that** the polymer of at least one ply (2) contains fillers dispersed therein.

23. An armouring element according to any one of claims 13 to 22, **characterised in that** at least one outer ply (2) of the armouring element (1) is provided with an outer layer (3) comprising a surface structure.

## Revendications

1. Procédé de fabrication d'un élément de blindage (1) comprenant au moins trois couches (2) disposées de manière sensiblement parallèle, constituées chacune d'un textile imprégné d'au moins un polymère durcissant et/ou durci, au moins une première couche (2a) étant imprégnée d'un premier polymère et au moins une troisième couche (2c) étant imprégnée d'un troisième polymère, le premier et le troisième polymère étant identiques et/ou différents, mais étant compatibles entre eux, tandis qu'au moins une deuxième couche (2b), disposée directement ou indirectement entre la première (2a) et la troisième couche (2c), est imprégnée d'un deuxième polymère, différent du premier polymère de la première couche (2a) et de celui de la troisième couche (2c), en particulier non compatible ou seulement difficilement compatible avec le premier et le troisième polymère, **caractérisé en ce que** le premier polymère de la première couche (2a) est lié de manière covalente, par zones, au troisième polymère de la troisième couche (2c), **en ce que** la deuxième couche (2b), disposée entre la première couche (2a) et la troisième couche (2c), comporte des zones de pénétration (4), permettant une pénétration de la deuxième couche (2b) avec une première et/ou une troisième résine, durcissable(s) face au premier ou au troisième polymère de la première (2a) et de la troisième couche (2c), et **en ce que** le textile de la première (2a) et celui de la troisième couche (2c), au moins dans les zones venant en appui sur les zones de pénétration (4) de la deuxième couche (2b), sont imprégnés de la première résine durcissable face au premier polymère, ou de la troisième résine durcissable face au troisième polymère, la première résine et la troisième résine étant mises en contact entre elles à travers les zones de pénétration (4) de la deuxième couche (2b) et durcies au moins partiellement, face au premier ou au troisième polymère, en formant des liaisons covalentes à travers les zones de pénétration (4) de la deuxième couche (2b).

2. Procédé selon la revendication 1, **caractérisé en ce que** les zones de pénétration (4) de la deuxième couche (2b) sont réalisées sous la forme d'une pluralité de zones disposées à distance les unes des autres.

3. Procédé selon la revendication 1 ou 2, **caractérisé en ce que** les zones de pénétration (4) de la deuxième couche (2b) sont réalisées sous la forme de zones (4a), non imprégnées du deuxième polymère, du textile de la deuxième couche (2b).

4. Procédé selon la revendication 1 ou 2, **caractérisé en ce que** les zones de pénétration (4) de la deuxième couche (2b) sont réalisées sous la forme d'évidements (4c) traversant cette couche (2b).

5. Procédé selon la revendication 4, **caractérisé en ce que**, dans les évidements (4c) de la deuxième couche (2b) sont disposés des pattes (6, 7) imprégnées de la première et/ou de la troisième résine, les pattes (6, 7) imprégnées étant disposées de manière qu'elles relient la première (2a) et la troisième couche (2c) au moyen des évidements (4c).

6. Procédé selon la revendication 5, **caractérisé en ce que** les pattes (6) sont obtenues par découpage à partir du textile de la première couche (2a) et/ou de la troisième couche (2c).

7. Procédé selon la revendication 5, **caractérisé en ce que** des pattes (7) séparées sont utilisées.

8. Procédé selon l'une des revendications 1 à 7, pour la fabrication d'un élément de blindage (1) comprenant au moins quatre couches (2) disposées de manière sensiblement parallèle, constituées chacune d'un textile imprégné d'au moins un polymère durcissant et/ou durci, au moins une quatrième couche (2d) étant imprégnée d'un quatrième polymère, identique ou différent du deuxième polymère de la deuxième couche (2b), mais compatible avec celui-ci, la première (2a) et/ou la troisième couche (2c) étant disposée(s), directement ou indirectement, entre la deuxième (2b) et la quatrième couche (2d), **caractérisé en ce que** le deuxième polymère de la deuxième couche (2b) est également lié de manière covalente, par zones, au quatrième polymère de la quatrième couche (2d), **en ce que** la première couche (2a), disposée(s) entre la deuxième couche (2b) et la quatrième couche (2d), et/ou la troisième couche (2c) comportent des zones de pénétration (4'), permettant une pénétration de la première (2a) et/ou troisième couche (2c) par la deuxième et/ou la quatrième résine, durcissable face au deuxième ou quatrième polymère de la deuxième couche (2b) et de la quatrième couche (2d), et le textile de la deuxième (2b) et de la quatrième couche (2d), au moins dans les zones venant en appui sur les zones de pénétration (4') de la première couche (2a), et/ou de la deuxième couche (2b), étant imprégnées de la deuxième résine durcissable face au deuxième polymère, ou de la quatrième résine durcissable face au quatrième polymère, la deuxième résine et la quatrième résine étant mises en contact entre elles à travers les zones de pénétration (4') de la première (2a) et/ou de la troisième couche (2c), et durcies au moins partiellement face au deuxième ou au quatrième polymère, en formant des liaisons covalentes, à travers les zones de pénétration (4') de la première (2a) et/ou de la troisième couche (2c).

9. Procédé selon la revendication 8, **caractérisé en ce que** la liaison de la deuxième couche (2b) à la quatrième couche (2d) est effectuée de manière correspondante à la liaison de la première couche (2a) à la troisième couche (2c), selon les caractéristiques d'au moins une des revendications 2 à 7.

10. Procédé selon l'une des revendications 1 à 9, **caractérisé en ce que** sont utilisés des polymères, ou des résines durcissables faces à de tels polymères, ayant une dureté différente.

11. Procédé selon l'une des revendications 1 à 10, **caractérisé en ce que** des charges sont dispersées dans la résine d'au moins une couche (2), avant le durcissement de cette résine face au polymère spécifique.

12. Procédé selon l'une des revendications 1 à 11, **caractérisé en ce qu'**au moins une couche extérieure (2) de l'élément de blindage (1) est munie d'une couche extérieure (3) présentant une structure de surface.

13. Elément de blindage (1) comprenant au moins trois couches (2) disposées de manière sensiblement parallèle, constituées chacune d'un textile imprégné d'au moins un polymère durcissant et/ou durci, au moins une première couche (2a) étant imprégnée d'un premier polymère et au moins une troisième couche (2c) étant imprégnée d'un troisième polymère, le premier et le troisième polymère étant identiques et/ou différents, mais étant compatibles entre eux, tandis qu'au moins une deuxième couche (2b), disposée directement ou indirectement entre la première (2a) et la troisième couche (2c), est imprégnée d'un deuxième polymère, différent du premier polymère de la première couche (2a) et de celui de la troisième couche (2c), en particulier non compatible ou seulement difficilement compatible avec le premier et le troisième polymère, **caractérisé en ce que** le premier polymère de la première couche (2a) est lié de manière covalente, par zones, au troisième polymère de la troisième couche (2c), la deuxième couche (2b), disposée entre la première couche (2a) et la troisième couche (2c), présentant des zones de pénétration (4), remplies du premier et/ou du troisième polymère.

14. Elément de blindage selon la revendication 13, **caractérisé en ce que** les zones de pénétration (4) de la deuxième couche (2b) sont formées d'une pluralité de zones disposées à distance les unes des autres.

15. Elément de blindage selon la revendication 13 ou 14, **caractérisé en ce que** les zones de pénétration (4) de la deuxième couche (2b) sont formées de zones (4a), imprégnées au moins partiellement du premier et/ou du troisième polymère de la première (2a) ou troisième couche (2c), du textile de la deuxième couche (2b).

16. Elément de blindage selon la revendication 13 ou 14, **caractérisé en ce que** les zones de pénétration (4) de la deuxième couche (2b) sont réalisées sous la forme d'évidements (4c), traversant cette couche (2b), traversés par des pattes (6, 7) imprégnées du polymère de la première (2a) et/ou de la troisième couche (2c), et reliant la première (2a) et la troisième couche (2c).

17. Elément de blindage selon la revendication 16, **caractérisé en ce que** les pattes (6) sont obtenues par découpage à partir du textile de la première couche (2a) et/ou de la troisième couche (2c).

18. Elément de blindage selon la revendication 16, **caractérisé en ce que** les pattes sont formées d'éléments séparés, en particulier sous la forme d'un textile.

19. Elément de blindage selon l'une des revendications 13 à 18, comprenant au moins quatre couches (2) disposées de manière sensiblement parallèle, constituées chacune d'un textile imprégné d'au moins un polymère durcissant et/ou durci, au moins une quatrième couche (2d) étant imprégnée d'un quatrième polymère, identique ou différent du deuxième polymère de la deuxième couche (2b), mais compatible avec celui-ci, la première (2a) et/ou la troisième couche (2c) étant disposée(s), directement ou indirectement, entre la deuxième (2b) et la quatrième couche (2d), **caractérisé en ce que** le deuxième polymère de la deuxième couche (2b) est également lié de manière covalente, par zones, au quatrième polymère de la quatrième couche (2d), la première (2a) et/ou troisième couche (2c), disposée(s) entre la deuxième couche (2b) et la quatrième couche (2d), présentant des zones de pénétration (4') remplies du deuxième et/ou du quatrième polymère.

20. Elément de blindage selon la revendication 19, **caractérisé en ce que** la liaison de la deuxième couche (2b) à la quatrième couche (2d) est réalisée de manière correspondante à la liaison de la première couche (2a) à la troisième couche (2c), selon les caractéristiques d'au moins une des revendications 14 à 18.

21. Elément de blindage selon l'une des revendications 13 à 20, **caractérisé en ce que** les polymères d'au moins quelques couches (2) présentent une dureté différente.

22. Elément de blindage selon l'une des revendications 13 à 21, **caractérisé en ce que** le polymère d'au moins une couche (2) contient des charges y étant dispersées.

23. Elément de blindage selon l'une des revendications 13 à 22, **caractérisé en ce qu'**au moins une couche extérieure (2) de l'élément de blindage (1) comporte une nappe extérieure (3) présentant une structure de surface.
